# EUROPÄISCHE PATENTSCHRIFT

(11) **EP 2 490 092 B1**
(45) Veröffentlichungstag und Bekanntmachung des Hinweises auf die Patenterteilung: **18.09.2013**
(21) Anmeldenummer: 11154607.3
(22) Anmeldetag: 16.02.2011
(51) Int. Cl.: G05D 1/02

(54) **Verfahren zur autarken Lokalisierung eines fahrerlosen, motorisierten Fahrzeugs**
Method for autonomous localisation of a driver-less motorised vehicle
Procédé de localisation autonome d'un véhicule motorisé sans conducteur

(43) Veröffentlichungstag der Anmeldung: 22.08.2012
(73) Patentinhaber: Siemens Aktiengesellschaft, 80333 München (DE)
(72) Erfinder: Lipkowski, Merten, 70378 Stuttgart (DE); Wösch, Thomas Dr., 81241 München (DE)

(56) Entgegenhaltungen:
- US-A1- 2008 027 591
- ARSENIO A ET AL: "Active range sensing for mobile robot localization", INTELLIGENT ROBOTS AND SYSTEMS, 1998. PROCEEDINGS., 1998 IEEE/RSJ INTE RNATIONALCONFERENCE ON,, Bd. 2, 13. Oktober 1998 (1998-10-13), Seiten 1066-1071, XP010311500, DOI: DOI:10.1109/IROS.1998.727440 ISBN: 978-0-7803-4465-5
- JOSEPH NSASI BAKAMBU ED - ANONYMOUS: "Integrated Autonomous System for Exploration and Navigation in Underground Mines", INTELLIGENT ROBOTS AND SYSTEMS, 2006 IEEE/RSJ INTERNATIONAL CONFERENCE ON, IEEE, PI, 1. Oktober 2006 (2006-10-01), Seiten 2308-2313, XP031006440, ISBN: 978-1-4244-0258-8
- LALLEMENT A ET AL: "Laser-vision cooperation for map building and landmarks recognition", INTELLIGENT CONTROL (ISIC), 1998. HELD JOINTLY WITH IEEE INTERNATIONAL SYMPOSIUM ON COMPUTATIONAL INTELLIGENCE IN ROBOTICS AND AUTOMATION (C IRA), INTELLIGENT SYSTEMS AND SEMIOTICS (ISAS)., PROCEEDINGS OF THE 19 98 IEEE INTERNATIONAL SYMPOSIUM ON GAI, 14. September 1998 (1998-09-14), Seiten 387-392, XP010299119, DOI: DOI:10.1109/ISIC.1998.713693 ISBN: 978-0-7803-4423-5

## Beschreibung

Die vorliegende Erfindung betrifft ein Verfahren zur autarken Lokalisierung eines fahrerlosen, motorisierten Fahrzeugs innerhalb einer bekannten Umgebung unter Verwendung zumindest eines Sensors.

Derartige Verfahren sind im Stand der Technik in unterschiedlichen Ausgestaltungen bekannt. Sie dienen dazu, die Position eines fahrerlosen, motorisierten Fahrzeugs zu bestimmten, wodurch die fahrerlose Navigation des Fahrzeugs ermöglicht wird.

Eingesetzt werden solche Lokalisierungsverfahren beispielsweise auf dem Gebiet der Lagerlogistik. Zum Transport von Ladungen werden dort zunehmend fahrerlose, motorisierte Fahrzeuge verwendet, um einen hohen Automatisierungsgrad zu erzielen.

Es gibt Lokalisierungsverfahren, die so genannte künstliche Landmarken in Form zusätzlicher Installationen wie Reflektormarken, Leitdrähte, Funkstationen oder dergleichen verwenden. Diese künstlichen Landmarken werden in der bekannten Umgebung, innerhalb derer das Fahrzeug lokalisiert werden soll, derart platziert, dass einerseits genügend Landmarken für eine sichere Lokalisierung vorhanden sind, andererseits jedoch der mit der Positionierung der Landmarken einhergehende Installations- und Kostenaufwand möglichst gering ist. Als Sensor zur Erfassung der künstlichen Landmarken kann beispielsweise ein auf dem Fahrzeug montierter entfernungsmessender Sensor dienen, beispielsweise in Form eines Laserscanners, der unter Verwendung eines Sensormotors gleichmäßig um eine Schwenkachse hin und her geschwenkt wird.

Autarke Lokalisierungsverfahren verwenden hingegen keine künstlichen Landmarken sondern natürliche Landmarken, wie beispielsweise in der Umgebung vorhandene geometrische Strukturelemente in Form von Rohren, Balken, Säulen oder dergleichen. Auf diese Weise wird ohne Eingriff in die Umgebung ein Höchstmaß an Flexibilität bei hochgenauer Lokalisierung erzielt. Dies hat insbesondere den Vorteil, dass Fahrzeugrouten ohne großen Zeit- und Kostenaufwand verändert werden können. Als Sensor kann hier ebenfalls ein auf dem Fahrzeug montierter Laserscanner dienen, der unter Verwendung eines Sensormotors gleichmäßig um eine Schwenkachse hin und her geschwenkt wird.

Derartige autarke Lokalisierungsverfahren funktionieren gut, solange ausreichend Umgebungsinformationen in Form von natürlichen Landmarken vorhanden sind, die mit einem entsprechenden Sensor erfasst werden können. In der Praxis kommt es allerdings häufig vor, dass manche Umgebungsbereiche nur sehr wenige natürliche Landmarken aufweisen, die zur Lokalisierung des Fahrzeugs dienen können. In solchen Umgebungsbereichen ist es daher von besonderer Bedeutung, die wenigen vorhandenen Informationen auch wirklich zu erfassen und zu nutzen. Die ordnungsgemäße Erfassung von Landmarken durch den eingesetzten Sensor kann allerdings nur bei entsprechend hoher Messdatendichte sichergestellt werden, wofür eine gewisse Zeitdauer erforderlich ist. Entsprechend kann die gesamte Umgebung des Fahrzeugs nicht zeitgleich sondern nur nach und nach mit entsprechendem Zeitversatz erfasst werden. Dies kann dazu führen, dass einige Umgebungsbereiche aufgrund der Fahrzeugbewegung gar nicht oder zumindest nicht ausreichend erfasst werden. Mit anderen Worten kann es passieren, dass Landmarken ohne Erfassung überfahren werden. In Bereichen, in denen ausreichend Landmarken vorhanden sind, stellt dies gewöhnlich kein Problem dar. In Umgebungsbereichen hingegen, in denen nur wenige Landmarken vorhanden sind, kann die Nichterfassung einer Landmarke dazu führen, dass das Fahrzeug nicht mehr lokalisierbar ist, was zu einem Stillstand des Fahrzeugs führt.

Weitere Lokalisationsverfahren sind in den Aufsätzen von ARSENIO A ET AL: "Active range sensing for mobile robot localization", INTELLIGENT ROBOTS AND SYSTEMS, 1998. Proceedings., 1998 IEEE/RSJ INTERNATIONAL CONFERENCE ON,, Bd. 2, 13. Oktober 1998 (1998-10-13), Seiten 1066-1071, XP010311500, DOI: DOI:10.1109/IROLS.1998.727440 ISBN: 978-0-7803-4465-5 und von JOSEPH NSASI BAKAMBU ED - ANONYMOUS: "Integrated Autonomous System for Exploration and Navigation in Underground Mines", INTELLIGENT ROBOTS AND SYSTEMS, 2006, IEEE/RSJ INTERNATIONAL CONFERENCE ON, IEEE, PI, 1. Oktober 2006 (2006-10-01), Seiten 2308-2313. XP031006440, ISBN: 978-1-4244-0258-8 beschrieben.

Ausgehend von diesem Stand der Technik ist es eine Aufgabe der vorliegenden Erfindung, ein Verfahren der eingangs genannten Art zu schaffen, bei dem sichergestellt wird, dass auch Landmarken in kritischen Umgebungsbereichen, in denen nur wenige Landmarken vorhanden sind, sicher erfasst werden, um auf diese Weise einen Stillstand des Fahrzeugs zu verhindern.

Zur Lösung dieser Aufgabe schafft die vorliegende Erfindung ein Verfahren zur autarken Lokalisierung eines fahrerlosen, motorisierten Fahrzeugs innerhalb einer bekannten Umgebung unter Verwendung eines auf dem Fahrzeug angeordneten entfernungsmessenden Sensors, dessen Messrichtung oder Messebene durch Antreiben zumindest eines Sensormotors veränderbar ist, wobei das Verfahren die Schritte aufweist: Erstellen einer Landkarte der Umgebung anhand von natürlichen Landmarken; Festlegen einer vorbestimmten Route, entlang der sich das Fahrzeug bewegen soll; Bestimmen derjenigen Landmarken, die entlang der vorbestimmten Route als Lokalisierungshilfe dienen können; Scannen der Umgebung zu verschiedenen Zeitpunkten unter Verwendung des Sensors zur Erfassung der vorab bestimmten Landmarken, während sich das Fahrzeug entlang der vorbestimmten Route bewegt; und Lokalisieren des Fahrzeugs durch Vergleichen der erfassten Landmarken mit den auf der Landkarte vermerkten Landmarken; wobei die Geschwindigkeit und/oder die Drehrichtung des Sensormotors zumindest in Umgebungsbereichen mit nur wenigen vorab bestimmten Landmarken derart gesteuert wird/werden, dass der Sensor aktiv auf diese Landmarken ausgerichtet wird, um deren Erfassung sicherzustellen. Mit anderen Worten wird der Sensor zumindest in Umgebungsbereichen mit nur wenigen Landmarken aktiv geführt und auf diese Landmarken ausgerichtet, indem die Geschwindigkeit und/oder die Drehrichtung des Sensormotors entsprechend geändert werden. Auf diese Weise wird sichergestellt, dass eine Erfassung der Landmarken in kritischen Umgebungsbereichen gewährleistet ist, weshalb das Fahrzeug seine aktuelle Position nicht verlieren kann. Entsprechend kommt es weder zum Stillstand des Fahrzeugs noch zum Abbruch der Fahrzeugnavigation.

Gemäß einer Ausgestaltung der vorliegenden Erfindung wird als Sensor ein in einer Ebene messender Laserscanner verwendet, dessen Messebene durch Antreiben des Sensormotors verschwenkbar ist. Durch die Kombination der Motorbewegung und der Laserebene wird der Messraum entsprechend dreidimensional erfasst.

Alternativ wird als Sensor ein Einstrahllaser verwendet, der auf einem Motor um zwei Schwenkachsen verschwenkbar befestigt ist. Alternativ kann auch dessen Strahl über einen auf einem Motor um zwei Schwenkachsen verschwenkbar angeordneten Spiegel ausgelenkt werden.

Bevorzugt wird beim Lokalisieren des Fahrzeugs die durch einen weiteren Sensor erfasste Fahrzeuggeschwindigkeit berücksichtigt. Unter Berücksichtigung der aktuellen Fahrzeuggeschwindigkeit kann zum einen die Geschwindigkeit, mit der der Sensormotor betrieben werden muss, um eine sichere Erfassung spezifischer Landmarken zu gewährleisten, sehr genau ermittelt werden. Zum anderen können zu verschiedenen Zeitpunkten durchgeführte Scans über die Fahrzeuggeschwindigkeit logisch miteinander verknüpft werden.

Gemäß einer Ausgestaltung wird/werden die Geschwindigkeit und/oder die Drehrichtung des Sensormotors derart gesteuert, dass der Sensor zumindest Landmarken in Umgebungsbereichen mit nur wenigen vorab bestimmten Landmarken intensiver als andere Landmarken scannt, insbesondere über eine längere Zeitdauer. Durch die Erhöhung der Messdatendichte kann der Erwartungswert der Positionsunsicherheit des Fahrzeugs minimiert werden, da der Fehler eines geometrischen Strukturelements bzw. einer natürlichen Landmarke mit zunehmender Anzahl von Messungen kleiner wird.

Bereiche, in denen keine Informationen erhältlich sind, werden hingegen bevorzugt mit einer geringeren Intensität oder gar nicht betrachtet. Damit sinkt die Anzahl von unbenötigten Messungen drastisch, wodurch sich die Verarbeitung der erfassten Messdaten vereinfacht, da sich durch Betrachten von ausschließlich relevanten Bereichen der Rechenumfang zum Lokalisieren des Fahrzeugs verringert.

Weitere Merkmale und Vorteile der vorliegenden Erfindung werden anhand der nachfolgenden Beschreibung einer bevorzugten Ausführungsform eines erfindungsgemäßen autarken Lokalisierungsverfahrens unter Bezugnahme auf die beiliegende Zeichnung deutlich. Darin ist/sind
- FIG 1: eine schematische Draufsicht auf ein zu lokalisierendes, motorbetriebenes Fahrzeug;
- FIG 2 bis 4: schematische Draufsichten, anhand derer die Funktionsweise eines bekannten autarken Lokalisierungsverfahrens und die damit einhergehenden Nachteile erläutert werden; und
- FIG 5 bis 8: schematische Draufsichten, anhand derer die Funktionsweise eines Lokalisierungsverfahrens gemäß einer Ausführungsform der vorliegenden Erfindung und die damit einhergehenden Vorteile erläutert werden.

Gleiche Bezugsziffern beziehen sich nachfolgend auf gleiche oder gleichartig ausgebildete Komponenten.

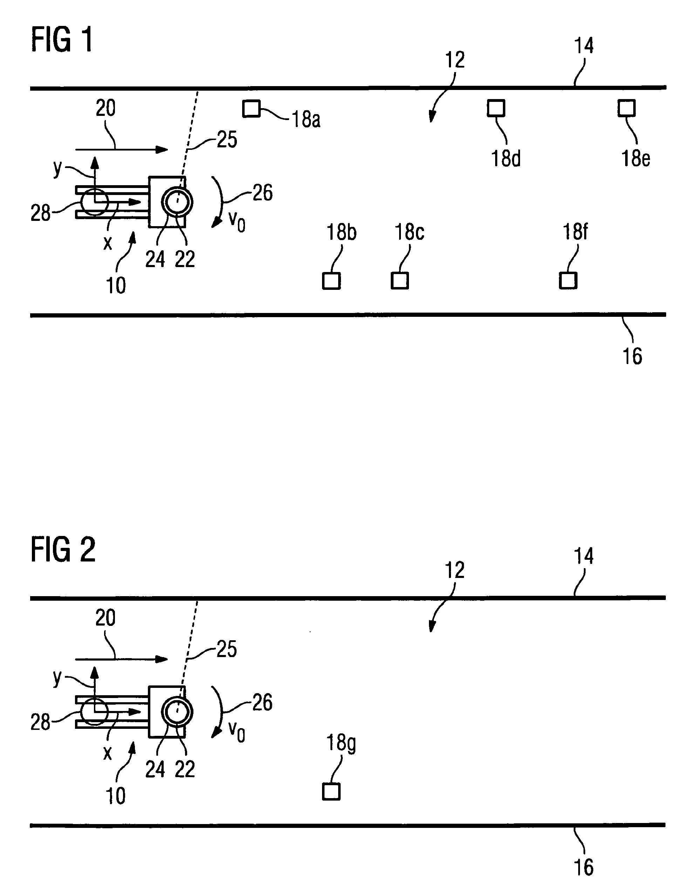

Figur 1 zeigt eine schematische Draufsicht eines fahrerlosen, motorisierten Fahrzeugs 10, das unter Verwendung eines autarken Lokalisierungsverfahrens innerhalb einer bekannten Umgebung 12, die vorliegend durch zwei einander gegenüber angeordnete Wände 14 und 16 begrenzt wird, lokalisiert werden soll. Die Lokalisierung des Fahrzeugs 10 erfolgt anhand von natürlichen Landmarken in Form der Wände 14 und 16 sowie in Form von in der Umgebung 12 vorhandenen geometrischen Strukturelementen 18a, b, c, d, e, f, wie beispielsweise Rohre, Balken, Säulen oder dergleichen. Diese natürlichen Landmarken 14, 16, 18a bis f werden während einer Bewegung des Fahrzeugs 10 in der durch den Pfeil 20 gekennzeichneten Bewegungsrichtung mithilfe eines auf dem Fahrzeug 10 angeordneten entfernungsmessenden Sensors 22 erfasst, bei dem es sich vorliegend um einen Laserscanner handelt. Der Sensor 22 ist auf einem Sensormotor 24 angeordnet, so dass seine Messebene 25 durch Antreiben des Sensormotors 24 um eine nicht näher dargestellte Schwenkachse verschwenkbar ist. Durch Verschwenken des Sensors 22, wie es durch den Pfeil 26 dargestellt ist, kann die Umgebung 12 entsprechend dreidimensional gescannt werden, um auf diese Weise die Landmarken 14, 16, 18 zu erfassen. Der Ring 28 symbolisiert dabei die Positionsunsicherheit des Fahrzeugs 10 in x- und y-Richtung.

Bei einem bekannten autarken Lokalisierungsverfahren wird der Sensormotor 24 zur Erfassung der Landmarken 14, 16, 18a bis f kontinuierlich mit einer konstanten Geschwindigkeit v0 in Richtung des Pfeils 26 betrieben. Die Geschwindigkeit v0 ist dabei derart gewählt, dass der Sensor 22 die Umgebung 12 mit einer hinreichend hohen Datendichte erfasst. Mit anderen Worten kann der Sensor 22 nicht beliebig schnell gedreht werden, da sonst eine Erfassung der Landmarken 18a bis f nicht möglich wäre. Zur Lokalisierung des Fahrzeugs 10 in der Umgebung 12 werden daraufhin die erfassten Landmarken 14, 16, 18 mit auf einer vorab erstellten Landkarte vermerkten Landmarken verglichen. Auf diese Weise kann das Fahrzeug 10 navigiert werden.

Bei Erfassung der Wände bzw. Landmarken 14, 16 liefern diese im Wesentlichen Lokalisierungsinformationen hinsichtlich der y-Position und der Orientierung des Fahrzeugs 10. Werden die Landmarken 18a bis f erfasst, liefern diese im Wesentlichen Lokalisierungsinformationen hinsichtlich der x-Position des Fahrzeugs.

Die Erfassung der Landmarken 14, 16 ist aufgrund ihrer Ausdehnung im vorliegenden Beispiel unkritisch. Ein Vorbeifahren, ohne deren Erfassung, ist nicht möglich. Eine Lokalisierung des Fahrzeugs in y-Position und Orientierung ist somit jederzeit gegeben. Kritisch ist hingegen die Lokalisierung der x-Positionen des Fahrzeugs, wie die folgenden Erläuterungen zeigen.

Aufgrund der Bewegung des Fahrzeugs 10 und der Zeit, die zum Scannen der Umgebung mit der erforderlichen Datendichte nötig ist, kann es passieren, dass einige der Landmarken 18a bis f nicht erfasst werden. Dies ist dann der Fall, wenn der Sensor 22, während das Fahrzeug 10 an einer der Landmarken 18a bis f vorbeifährt, gerade in eine andere Richtung ausgerichtet ist. Somit wird die entsprechende Landmarke 18a bis f "überfahren". In Umgebungsbereichen, in denen ausreichend viele Landmarken 18a bis f vorhanden sind, ist dies nicht problematisch, da genügend andere Landmarken 18a bis f erfasst werden, anhand derer eine Lokalisierung des Fahrzeugs 10 erfolgen kann. Kritisch ist ein "Überfahren" hingegen in Umgebungsbereichen mit nur wenigen Landmarken, wie es nachfolgend anhand der Figuren 2 bis 4 erläutert wird.

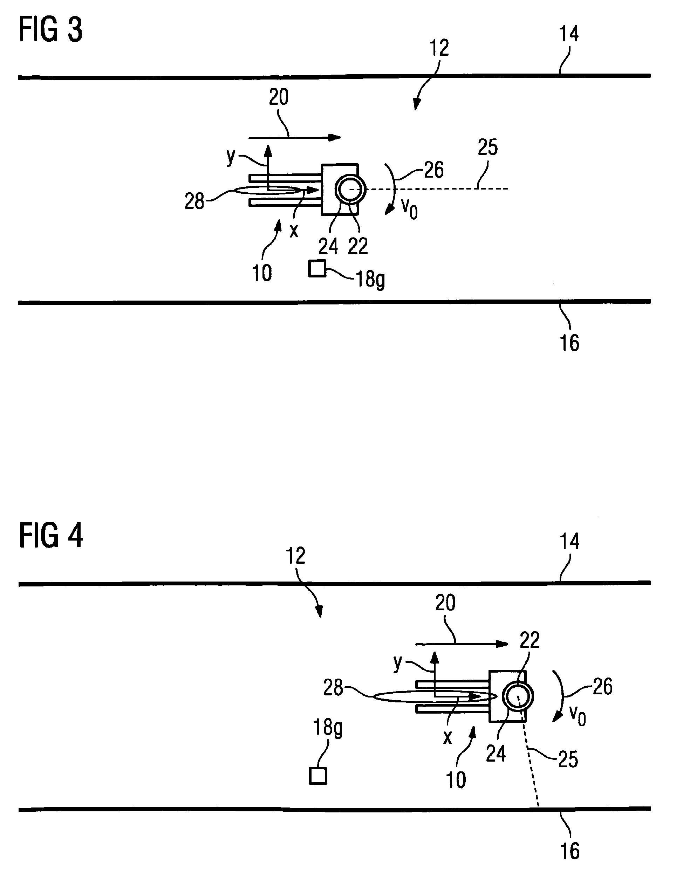

Die Figuren 2 bis 4 zeigen Momentaufnahmen während des Scannens eines Umgebungsbereiches, in dem nur eine einzelne Landmarke 18g vorhanden ist, die zur Lokalisierung des Fahrzeugs 10 innerhalb dieses Umgebungsbereiches dienen kann. Figur 1 zeigt das sich in Richtung des Pfeils 20 bewegende Fahrzeug 10 in einer ersten Position, in der der Sensor 22 in Richtung der Wand 14 ausgerichtet ist. Wird nun das Fahrzeug 10 aus der in Figur 2 dargestellten Position weiter in Richtung des Pfeils 20 in die in Figur 3 dargestellte Position bewegt, während der Sensor 22 unter Betätigung des Sensormotors 24 mit der konstanten Geschwindigkeit v0 in Richtung des Pfeils 26 gedreht wird, so verbessert sich die Positionsunsicherheit in y-Richtung aufgrund der Tatsache, dass die Abstände zur Wand 14 durch den Sensor 22 erfasst wurden. Hingegen nimmt die Positionsunsicherheit in x-Richtung zu, da in diesem Abschnitt keine Landmarke erfasst werden konnte. Wird nun das Fahrzeug 10 ausgehend von der in Figur 3 dargestellten Position weiter in Richtung des Pfeils 20 in die in Figur 4 dargestellte Position bewegt, so wird deutlich, dass die Landmarke 18g überfahren wurde, ohne dass sie von dem Sensor 22 erfasst werden konnte. Dabei nimmt die Positionsunsicherheit in x-Richtung derart zu, dass eine Lokalisierung des Fahrzeugs 10 innerhalb der Umgebung 12 nicht länger möglich ist, weshalb das Fahrzeug 10 stehen bleibt.

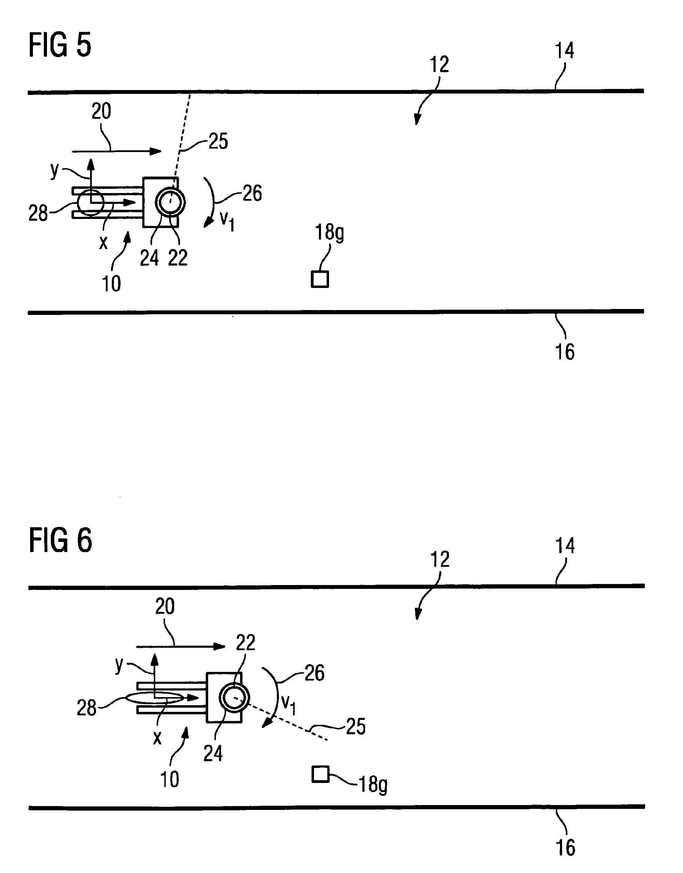

Dieses Problems wird durch das erfindungsgemäße autarke Lokalisierungsverfahren behoben, wie es nachfolgend unter Bezugnahme auf die Figuren 5 bis 8 anhand eines Ausführungsbeispiels des erfindungsgemäßen Verfahrens näher erläutert wird.

In einem ersten Schritt wird bei dem erfindungsgemäßen autarken Lokalisierungsverfahren gemäß einer Ausführungsform der vorliegenden Erfindung eine Landkarte der Umgebung 12 anhand der darin vorhandenen natürlichen Landmarken 14, 16, 18 erstellt. In einem weiteren Schritt wird eine vorbestimmte Route festgelegt, entlang der sich das Fahrzeug 10 in der Umgebung 12 bewegen soll. Daraufhin werden diejenigen Landmarken 18 bestimmt, die entlang der vorbestimmten Route als Lokalisierungshilfe dienen können. Dabei werden kritische Umgebungsbereiche identifiziert, in denen nur wenige der vorab bestimmten Landmarken 18 vorhanden sind.

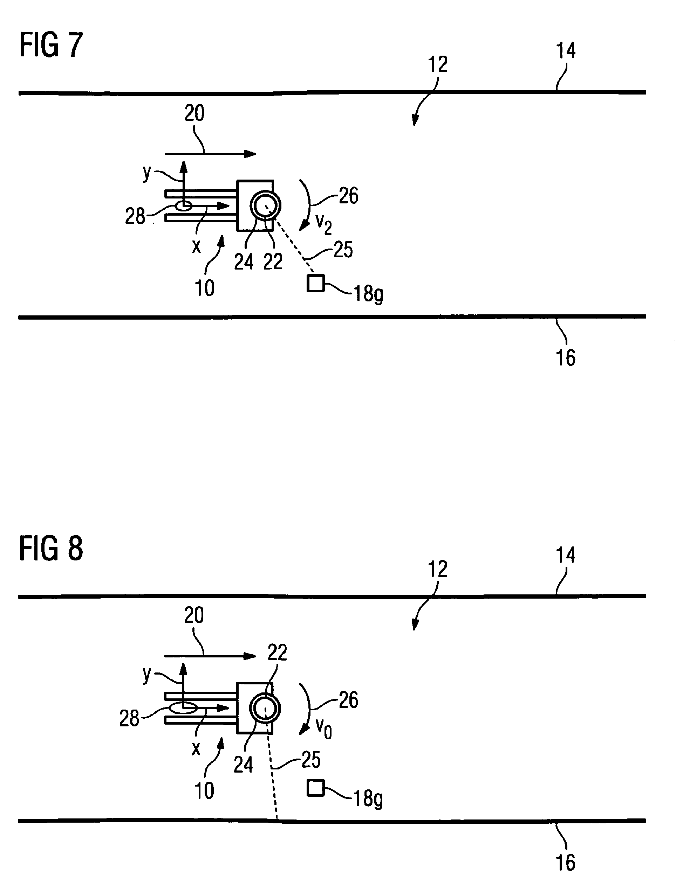

Nunmehr wird das Fahrzeug 10 in Richtung des Pfeils 20 mit gleichmäßiger Geschwindigkeit entlang der vorbestimmten Route bewegt, wobei der Sensormotor 24 mit konstanter Geschwindigkeit v0 zum Verschwenken des Sensors 22 betrieben wird. Gelangt das Fahrzeug 10 nunmehr in einen der vorab identifizierten kritischen Umgebungsbereiche, in dem nur wenige Landmarken vorhanden sind - vorliegend nur eine einzige Landmarke 18g, wie es in Figur 2 dargestellt ist - so wird der Sensormotor 24 aktiv von der Geschwindigkeit v0 auf die Geschwindigkeit v1 beschleunigt, so dass sich der Sensor 22 wesentlich schneller in Richtung des Pfeils 26 dreht. Dabei nimmt die Positionsunsicherheit in y-Richtung, wie es in Figur 6 gezeigt ist, ab, während die Positionsunsicherheit in x-Richtung zunimmt, wie es vorab bereits unter Bezugnahme auf die Figuren 2 und 3 beschrieben wurde. Kurz vor demjenigen Zeitpunkt, zu dem der Sensor 22 die Landmarke 18g erfasst, wird der Sensormotor 24 erneut aktiv angesteuert, um die Geschwindigkeit v1 auf eine Geschwindigkeit v2 zu reduzieren, wobei v2 kleiner als v0 ist. Dies führt dazu, dass der Sensor 22 die Landmarke 18g mit sehr hoher Messdatendichte erfasst, wodurch die Positionsungenauigkeit in x-Richtung stark verringert wird, wie es in Figur 7 dargestellt ist. Nach Erfassen der Landmarke 18g durch den Sensor 22 wird der Sensormotor 24 erneut aktiv angesteuert, um dessen Geschwindigkeit wieder zu erhöhen, beispielsweise auf die Geschwindigkeit v0, wie es in Figur 8 dargestellt ist.

Es sollte klar sein, dass nicht nur die Sensormotorgeschwindigkeit sondern auch die Drehrichtung des Sensormotors 24 zur Sicherstellung der Landmarkenerfassung verändert werden kann. Auch kann es sich bei dem Sensor 22 alternativ um einen Einstrahllaser handeln, der auf einem Motor um zwei Schwenkachsen verschwenkbar befestigt ist oder dessen Messstrahl über einen auf einem Motor um zwei Schwenkachsen verschwenkbar befestigten Spiegel ausgelenkt wird.

Ein wesentlicher Vorteil des erfindungsgemäßen autarken Lokalisierungsverfahrens gegenüber dem unter Bezugnahme auf die Figuren 2 bis 4 beschriebenen Verfahren besteht darin, dass durch ein aktives Ansteuern des Sensormotors 24 sichergestellt wird, dass Landmarken auch in denjenigen Umgebungsbereichen, in denen nur wenige Landmarken vorhanden sind, erfasst werden, so dass das Fahrzeug 10 innerhalb der Umgebung 12 stets lokalisiert werden kann. Ein Verlust der Fahrzeugposition und ein damit verbundener Navigationsabbruch werden ausgeschlossen. Auch eine Reduzierung der Fahrzeuggeschwindigkeit in kritischen Umgebungsbereichen zur sicheren Erfassung von Landmarken ist nicht erforderlich. Die Verringerung der Sensormotorgeschwindigkeit von der Geschwindigkeit v1 auf die Geschwindigkeit v2 im Bereich einer Landmarke 18g in einem kritischen Umgebungsbereich ermöglicht die Erhöhung der Messdatendichte und auf diese Weise ein sicheres Erfassen der entsprechenden Landmarke 18g. Die Erhöhung der Sensormotorgeschwindigkeit von v0 auf v1 und die damit einhergehende Verringerung der Messdatendichte führt dazu, dass der entsprechende Umgebungsabschnitt weniger intensiv gescannt wird. Dies ist unproblematisch, da die vorab durchgeführte Analyse der vorbestimmten Route ergeben hat, dass in dem Umgebungsabschnitt, den der Sensor 22 während der Beschleunigung des Sensormotors 24 scannt, keine relevanten Landmarken 18 vorhanden sind. In Umgebungsabschnitten ohne Landmarken 18 kann ein Scannen auch ganz entfallen, solange die Positionsungenauigkeit in y-Richtung nicht zu groß wird. Je weniger unnötige Messdaten erfasst werden, desto schneller und einfacher kann das Fahrzeug 10 innerhalb der Umgebung 12 lokalisiert werden.

Ist die Fahrzeuggeschwindigkeit nicht konstant, so wird diese bevorzugt mit einem entsprechenden Sensor erfasst, beispielsweise unter Verwendung eines die Drehzahl der Fahrzeugräder erfassenden Sensors. Die aktuell erfasste Fahrzeuggeschwindigkeit wird dann bei der Lokalisierung des Fahrzeugs 10 berücksichtigt.

## Patentansprüche

1. Verfahren zur autarken Lokalisierung eines fahrerlosen, motorisierten Fahrzeugs (10) innerhalb einer bekannten Umgebung (12) unter Verwendung eines auf dem Fahrzeug (10) angeordneten entfernungsmessenden Sensors (22), dessen Messrichtung oder Messebene durch Antreiben zumindest eines Sensormotors (24) veränderbar ist, wobei das Verfahren die folgenden Schritte aufweist:
- Erstellen einer Landkarte der Umgebung (12) anhand von natürlichen Landmarken (14, 16, 18a bis g);
- Festlegen einer vorbestimmten Route, entlang der sich das Fahrzeug (10) bewegen soll;
- Bestimmen derjenigen Landmarken (14, 16, 18a bis g), die entlang der vorbestimmten Route als Lokalisierungshilfe dienen können;
- Scannen der Umgebung (12) zu verschiedenen Zeitpunkten unter Verwendung des Sensors (22) zur Erfassung der vorab bestimmten Landmarken (14, 16, 18a bis g), während sich das Fahrzeug (10) entlang der vorbestimmten Route bewegt; und
- Lokalisieren des Fahrzeugs (10) durch Vergleichen der erfassten Landmarken (14, 16, 18a bis g) mit den auf der Landkarte vermerkten Landmarken (14, 16, 18a bis g);
**dadurch gekennzeichnet, dass**
die Geschwindigkeit und/oder die Drehrichtung des Sensormotors (24) zumindest in Umgebungsbereichen mit nur wenigen vorab bestimmten Landmarken (18g) derart aktiv gesteuert wird/werden, dass der Sensor (22) auf diese Landmarken (18g) ausgerichtet wird, um deren Erfassung sicherzustellen.

2. Verfahren nach Anspruch 1,
**dadurch gekennzeichnet, dass**
als Sensor (22) ein in einer Ebene messender Laserscanner verwendet wird, dessen Messebene durch Antreiben des Sensormotors (24) verschwenkbar ist.

3. Verfahren nach Anspruch 1,
**dadurch gekennzeichnet, dass**
als Sensor (22) ein Einstrahllaser verwendet wird, der auf einem Motor um zwei Schwenkachsen verschwenkbar befestigt ist oder dessen Messstrahl über einen auf einem Motor um zwei Schwenkachsen verschwenkbar befestigten Spiegel ausgelenkt wird.

4. Verfahren nach einem der vorhergehenden Ansprüche,
**dadurch gekennzeichnet, dass**
beim Lokalisieren des Fahrzeugs (10) die durch einen weiteren Sensor erfasste Fahrzeuggeschwindigkeit berücksichtigt wird.

5. Verfahren nach einem der vorhergehenden Ansprüche,
**dadurch gekennzeichnet, dass**
die Geschwindigkeit und/oder die Drehrichtung des Sensormotors (24) derart gesteuert wird/werden, dass der Sensor (22) zumindest Landmarken (18g) in Umgebungsbereichen mit nur wenigen vorab bestimmten Landmarken intensiver als andere Landmarken (14, 16, 18a bis f) scannt, insbesondere über eine längere Zeitdauer.

6. Verfahren nach einem der vorhergehenden Ansprüche,
**dadurch gekennzeichnet, dass**
die Geschwindigkeit und/oder die Drehrichtung des Sensormotors (24) derart gesteuert wird/werden, dass der Sensor (22) irrelevante Umgebungsbereiche, die keine vorab bestimmten Landmarken aufweisen, mit geringerer Intensität als andere Umgebungsbereiche oder gar nicht scannt.

## Claims

1. Method for the autonomous localisation of a driverless motorised vehicle (10) within a known surrounding area (12) using a distance-measuring sensor (22) which is disposed on the vehicle (10) and whose direction of measurement or plane of measurement can be varied by driving at least one sensor motor (24), the method comprising the following steps:
- Create a map of the surrounding area (12) based on natural landmarks (14, 16, 18a to g);
- Set a predetermined route along which the vehicle is to move (10);
- Determine those landmarks (14, 16, 18a to g) which can serve as localisation aids along the predetermined route;
- Scan the surrounding area (12) at different time points using the sensor (22) for detecting the previously determined landmarks (14, 16, 18a to g) while the vehicle (10) is moving along the predetermined route;
and
- Locate the vehicle (10) by comparing the detected landmarks (14, 16, 18a to g) with the landmarks (14, 16, 18a to g) marked on the map;
**characterised in that**
the speed and/or direction of rotation of the sensor motor (24) is/are actively controlled at least in surrounding regions containing only a few previously determined landmarks (18g) such that the sensor (22) is aligned towards these landmarks (18g) in order to ensure their detection.

2. Method according to claim 1,
**characterised in that**
a laser scanner measuring in one plane is used as a sensor (22), it being possible to pivot the plane of measurement of said laser scanner by driving the sensor motor (24).

3. Method according to claim 1,
**characterised in that**
a single-beam laser is used as a sensor (22) and is mounted on a motor so as to be capable of pivoting about two pivot axes or whose measuring beam is deflected by a mirror attached to a motor so as to be capable of pivoting about two pivot axes.

4. Method according to one of the preceding claims,
**characterised in that**
in locating the vehicle (10) the vehicle speed detected by another sensor is taken into account.

5. Method according to one of the preceding claims,
**characterised in that**
the speed and/or direction of rotation of the sensor motor (24) is/are controlled such that the sensor (22) at least scans landmarks (18g) in the surrounding regions containing only a few previously determined landmarks more intensively than other landmarks (14, 16, 18a to f), particularly over an extended period of time.

6. Method according to one of the preceding claims,
**characterised in that**
the speed and/or direction of rotation of the sensor motor (24) is/are controlled such that the sensor (22) scans irrelevant surrounding regions which have no previously determined landmarks with lesser intensity than other surrounding regions, or not at all.

## Revendications

1. Procédé de localisation autonome d'un véhicule ( 10 ) motorisé sans conducteur dans un environnement ( 12 ) connu, en utilisant un capteur ( 22 ), qui est monté sur le véhicule ( 10 ), qui mesure un éloignement et dont le dispositif de mesure ou le plan de mesure peut être modifié par entraînement d'au moins un moteur ( 24 ) du capteur, le procédé comprenant les stades suivant :
- établissement d'une carte terrestre de l'environnement ( 12 ), au moyen de repères ( 14, 16, 18a à g ) terrestres naturels ;
- fixation d'un trajet déterminé à l'avance le long duquel le véhicule ( 20 ) doit se déplacer ;
- détermination des repères ( 14, 16, 18a à g ) terrestres qui peuvent servir d'aide à la localisation le long du trajet déterminé à l'avance ;
- balayage de l'environnement ( 12 ) en des instants différents, en utilisant le capteur ( 22 ) pour la détection des repères ( 14, 16, 18a à g ) terrestres déterminés précédemment pendant que le véhicule ( 10 ) se déplace le long du trajet déterminé à l'avance ; et
- localisation du véhicule ( 10 ) en comparant les repères ( 14, 16, 18a à g ) terrestres détectés aux repères ( 14, 16, 18a à g ) terrestres notés sur la carte terrestre ;
**caractérisé en ce que**
on règle de manière active la vitesse et/ou le sens de rotation du moteur ( 24 ) du capteur au moins dans des zones de l'environnement ayant seulement peu de repères ( 18g ) terrestres déterminés précédemment de manière à ce que le capteur ( 22 ) soit orienté sur ces repères ( 18g ) terrestres pour assurer leur détection.

2. Procédé suivant la revendication 1,
**caractérisé en ce que**
on utilise comme capteur ( 22 ) un lecteur laser mesurant dans un plan, dont le plan de mesure peut pivoter par entraînement du moteur ( 24 ) du capteur.

3. Procédé suivant la revendication 1,
**caractérisé en ce que**
on utilise comme capteur ( 22 ) un laser émettant un rayonnement, qui est fixé sur un moteur de manière à pouvoir pivoter autour de deux axes de pivotement ou dont le faisceau de mesure est dévié par un miroir, fixé sur le moteur de manière à pouvoir pivoter autour de deux axes de pivotement.

4. Procédé suivant l'une des revendications précédentes,
**caractérisé en ce que**
lors de la localisation du véhicule ( 10 ), on tient compte de la vitesse du véhicule détectée par un autre capteur.

5. Procédé suivant l'une des revendications précédentes,
**caractérisé en ce que**
on règle la vitesse et/ou le sens de rotation du moteur ( 24 ) du capteur de manière à ce que le capteur ( 22 ) balaye au moins des repères ( 18g ) terrestres dans des zones de l'environnement n'ayant que peu de repères terrestres déterminés précédemment, d'une manière plus intense que d'autres repères ( 14, 16, 18a à f ) terrestres, notamment pendant une durée plus grande.

6. Procédé suivant l'une des revendications précédentes,
**caractérisé en ce que**
on règle la vitesse et/ou le sens de rotation du moteur ( 24 ) du capteur de manière à ce que le capteur balaye des zones de l'environnement non pertinentes, qui n'ont pas de repères terrestres déterminés précédemment, à une intensité plus petite que d'autres zones de l'environnement ou ne les balaye pas du tout.
